# EUROPÄISCHE PATENTANMELDUNG

(11) **EP 0 953 820 A2**
(43) Veröffentlichungstag der Anmeldung: **03.11.1999**
(21) Anmeldenummer: 99108041.7
(22) Anmeldetag: 23.04.1999
(51) Int. Cl.: F42C 11/00, B60R 21/00

(54) **Anzündelement**

(30) Priorität: 30.04.1998 DE 19819428
(71) Anmelder: DaimlerChrysler AG, 70567 Stuttgart (DE)
(72) Erfinder: Laucht, Horst Dr., 83052 Bruckmühl (DE); Müller, Gerhard Dr., 85567 Grafing (DE); Welser, Wolfgang, 85551 Kirchheim (DE)

(57) **Zusammenfassung**

Der Erfindung liegt die Aufgabe zugrunde die Verlustleistung, den Platzbedarf und die Kosten eines Airbag-Zündkreises zu verringern.

Diese Aufgabe wird erfindungsgemäß dadurch gelöst, daß der/die Zündschalter (2,3,5) zugleich Schalter und Anzündelement (7) des Zündkreises sind.

Die Erfindung findet Anwendung auf einen Zündkreises, der in einem Silizium-Chip integriert ist und mindestens einen als Transistor ausgebildeten Zündschalter aufweist.

## Beschreibung

Die Erfindung betrifft ein Anzündelement für einen Zündkreis, insbesondere für einen Airbag-Zündkreis, gemäß dem Oberbegriff des Patentanspruchs 1.

In heutigen Airbag-Systemen werden die Airbag-Zünder von einem zentralen Steuergerät über diskrete Leitung einzeln gezündet. Dazu befinden sich im Steuergerät je Zündkreis ein Zündkondensator, zwei Zündschalter sowie eine Diagnoselogik. Die Nachteile dieser Auslegung liegen darin, daß von der im Zündkondensator gespeicherten Energie nur etwa ein Drittel im Anzündelement umgesetzt wird - ca. 6Ω Gesamtwiderstand bei 2Ω Anzündelementwiderstand -, daß die in den Zündschaltern umgesetzte Energie durch gute Wärmeleitung an das Substrat abgeführt werden muß, daß die Fläche der Zündschalter durch den Schaltstrom, die umgesetzte Energie und die Wärmeableitung bestimmt wird und daß die Umsetzung der Schaltung in Silizium zweimaligen Flächenbedarf für die Zündschalter und das Anzündelement erfordert (DE 37 17 149 A1).

Die Diagnose-Logik prüft jeweils die Funktion der einzelnen Zündschalter, den gesamten Leitungswiderstand des Zündkreises sowie Schlüsse der Leitung nach Plus oder Masse.

Neue Konzepte der Airbagzündung beinhalten einen direkt an den Zünder angekoppelten Halbleiterzündkreis der über einen Zündbus von dem zentralen Steuergerät ferngesteuert ist. Dadurch entfällt der Leitungswiderstand des Zündkreises. Trotzdem verbleibt immer noch ein Verhältnis von ca. 1:1 zwischen der an den Zündschaltern enstehenden Verlustleistung und der eigentlichen Zündleistung. Die Verlustleistung an den Zündschaltern beeinflußt die Baugröße des als integrierte Halbleiterschaltung ausgeführten Zündkreises und die Größe des Zündkondensators wesentlich.

Der Erfindung liegt die Aufgabe zugrunde die Verlustleistung, den Platzbedarf und die Kosten eines Airbag-Zündkreises zu verringern.

Diese Aufgabe wird erfindungsgemäß durch die Merkmale des Patentanspruchs 1 gelöst. Weiterbildungen der Erfindung sind in den Unteransprüchen angegeben.

Die erfindungsgemaße Idee ist die Verwendung der 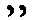 Verlustleistung" der Zündschalter zur Zündung, d.h. die Zündschalter selbst stellen das Anzündelement dar und das Anzündelement als zusätzliches Bauteil entfällt. Die Vorteile der erfindungsgemäßen Lösung liegen darin, daß die Verlustleistung gleich Null ist, da die Zündschalter selbst das Anzündelement darstellen. Bei der Umsetzung in Silizium ist nur einmal Flächenbedarf notwendig und durch die Verwendung von 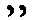 verlustreichen" Zündschaltern läßt sich dieser Flächenbedarf noch zusätzlich reduzieren. Die Fläche der Zündschalter ist nur von der aufzubrindgenden Pyrotechnik abhängig.

Die erforderliche Zündenergie läßt sich vorteilhaft durch thermische Isolation der Zündschalter gegen das Substrat reduzieren und die Diagnose kann wie bei der bisherigen Lösung erfolgen, indem jeder der beiden Zündschalter auf Funktion geprüft wird. Die Prüfung des Leitungswiderstandes entfällt jedoch. Alternativ kann wie nachfolgend angegeben eine Funktionsprüfung mittels einer Diode erfolgen.

Eine weitere Verbesserung des Systems läßt sich dadurch erreichen, daß nur mehr ein Zündschalter verwendet wird und/oder die Diagnose mittels eines separaten Sensorelementes (Diode) durch dynamische Temperaturmessung bei Prüfsignal unterhalb der Zündschwelle durchgeführt wird. Die zusätzlichen Vorteile dieser Anordnung liegen darin, daß bei der Umsetzung in Silizium nur einmal geringer Flächenbedarf notwendig ist. Bei dieser Lösung erfolgt in vorteilhafter Weise die Diagnose durch eine dynamische Temperaturmessung bei durch die Diagnoselogik erzeugtem Prüfsignal. Damit wird eine tatsächliche Funktionsprüfung unterhalb der Zündschwelle möglich.

Wenn aus Sicherheitsgründen eine zweifache Schaltung durch zwei unabhängige Schalter gefordert ist, damit ein Einfachfehler nicht zum Auslösen führt, kann dies, wie in einem Unteranspruch angegeben, mittels eines zweiten, vorgeschalteten Zündschalters erfolgen. Ein weiterer Vorteil dieser Lösung liegt in der technologischen Redundanz durch Verwendung unterschiedlicher Technologien für die beiden Zündschalter.

Für die Silizium-Realisierung des erfindungsgemäßen Anzündelementes ist eine 'silicon-hotplate'-Struktur angegeben, mit der sich vorteilhaft die erforderliche thermische Zündenergie erzeugen läßt.

Anhand der Zeichnung werden Ausführungsbeispiele der Erfindung näher erläutert.
- Fig.1: zeigt das Schaltbild eines Airbag-Zündkreises mit einem erfindungsgemäßen Anzündelement, das zwei hintereinandergeschaltete Zündschalter aufweist,
- Fig.2: zeigt das Schaltbild eines Airbag-Zündkreises mit einem erfindugsgemäßen Anzündelement, das nur einen Zündschalter sowie ein separates Sensorelement für die Diagnose aufweist,
- Fig.3: zeigt das Schaltbild eines Airbag-Zündkreises entsprechend Fig.2 mit einem zusätzlichen Zündschalter zur Verbesserung der Zuverläsig bei Einfachfehlern und
- Fig.4a und Fig.4b: zeigen eine Realisierung eines erfindungsgemäßen Anzündelementes in Silizium in einer geschnittenen Seitenansicht und in Draufsicht.

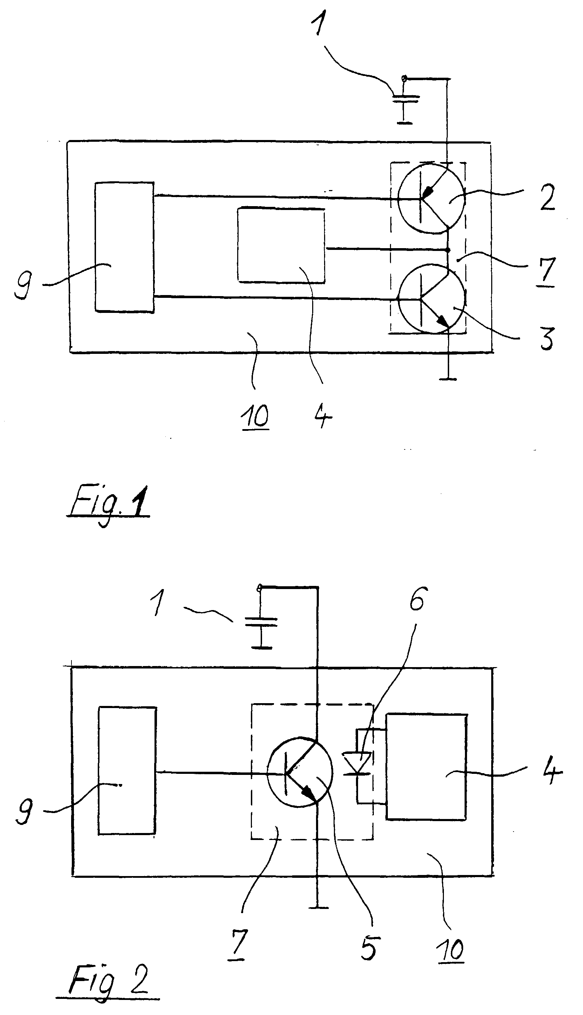

Der in Fig.1 gezeigte Airbag-Zündkreis besteht aus einem Zündkondensator 1, einem Anzündelement 7 mit einem Zündschalter 2 und mit einem Zündschalter 3, einer Diagnoselogik 4 , einer Sensor-und Auslöseelektronik 9 sowie einem Silizium-Chip (Si-Chip) 10.

Die beiden Zündschalter 2 und 3 sind in dem Airbag-Zündkreis direkt hintereinandergeschaltet, wobei in bekannter Weise der Zündschalter 2 als pnp-Transistor den "high-Zündschalter" und der Zündschalter 3 als npn-Transistor den "low-Zündschalter" bildet. Dabei ist der Emitter des Zündschalters 2 mit dem Pluspol des Zündkondensators 1 und sein Kollektor mit dem Kollektor des Zündschalters 3 verbunden, dessen Emitter auf Masse des Zündkreises liegt. In die Basis der Transistoren ist jeweils das Zünd-/Prüfsignal eingespeist. Die Diagnoselogik 4 überwacht den Zündkreis zwischen den beiden Zündschaltern 2 und 3 und die Sensor-und Auslöseelektronik 9 erzeugt im Bedarfsfall das Zündsignal.

Erfindungsgemäß wird auf das üblicherweise im Stand der Technik zwischen den Kollektoranschlüssen der Transistoren angeordnete, zusätzliche Anzündelement verzichtet und die Verlustleistung an den Zündschaltern 2 und 3 zur Zündung des Airbags benutzt. Alle Komponeneten des Airbag-Zündkreises - bis auf den Zündkondensator 1 - sind auf dem Si-Chip 10 implementiert. Die Zündschalter 2 und 3 bilden mit entsprechend ausgebildeten Signaleingängen für das Zünd-/Prüfsignal neben dem Schalt- auch gleichzeitig das Anzündelement 7.

Fig.2 zeigt einen Airbag-Zündkreis bestehend aus einem Zündkondensator 1, einem Anzündelement 7 mit nur einem Zündschalter 5 und mit einem - von dem Zündschalter 5 separierten - Sensorelement 6, einer Diagnoselogik 4 , einer Auslöse-und Sensorelektronik 9 sowie einem Si-Chip 10.

Der Zündschalter 5 ist als npn-Transistor ausgebildet und liegt mit seinem Kollektor am Pluspol des Zündkondensators 1 und mit seinem Emitter auf Masse des Zündkreises. In die Basis des Transistors wird das Zünd-/Prüfsignal eingespeist.

Das Sensorelement 6 ist als Diode ausgeführt. Zur Überwachung des Zündkreises wird in bekannter Weise mit der Diode eine dynamische Temperaturmessung bei Prüfsignal an der Basis des Transistors ausgeführt. Dabei führt das Prüfsignal über den dadurch geschalteten Prüfstrom zu einer Erwärmung des Anzündelementes deutlich unterhalb der Zündtemperatur. Die Verlustleistung an dem Zündschalter 5 wird zur Zündung des Airbags benutzt. Alle Komponenten des Airbag-Zündkreises - bis auf den Zündkondensator 1 - sind auf dem Si-Chip 10 implementiert.

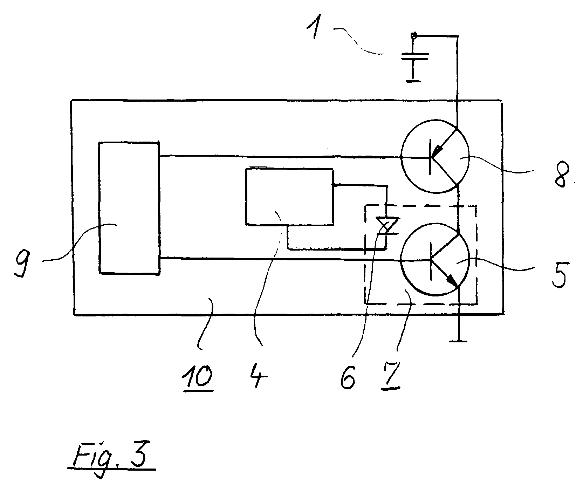

Wenn aus Sicherheitsgründen eine zweifache Schaltung durch zwei unabhängige Schalter gefordert ist, damit ein Einfachfehler nicht zum Auslösen führt, dann kann die in Fig.2 gezeigte Schaltung durch einen zusätzlich in Reihe geschalteten Zündschalter 8 erweitert werden, der keine thermische Zündenergie abgibt, wie es in Fig.3 gezeigt ist.

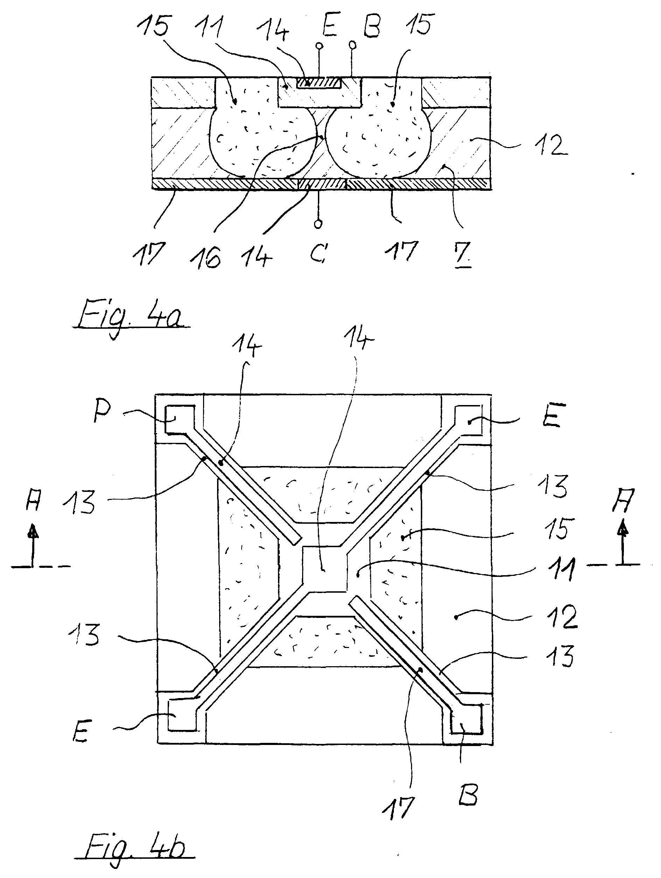

Fig.4a zeigt in - bei A--A geschnittener - Seitenansicht eine Si-Realisierung eines Anzündelementes 7. Es besteht aus einer Silizium-Membran (Si-Membran) 11, einem Silizium-Rahmen (Si-Rahmen)12, vier Silizium-Stegen (Si-Stegen)13, p⁺ - Implantationen 14, porösen Silizium-Bereichen (Si-Bereichen)15, einer Silizium-Säule (Si-Säule) 16 und n⁺ - Implantationen 17.

Das Anzündelement 7 ist ein vertikaler pnp-Transistor, dessen an der Oberfläche liegende n-Basis als Si-Membran 11 ausgebildet ist, die nur einige µm dick und an den vier Si-Stegen 13 in dem massiven Si-Rahmen 12 aufgehängt ist. In der Si-Membran 11, die elektrisch einer n-Wanne entspricht, ist eine p⁺ - Implantation 14 untergebracht, die den Emitter des pnp-Transistors bildet. Die Si-Membran 11 wird durch Unterätzen mit Hilfe der porösen Opferschichttechnik unter Bildung der porösen Si-Bereiche 15 in dem Silizium-Substrat freigelegt. Der Ätzvorgang wird jedoch kurz vor Vollendung abgebrochen, so daß die Si-Membran 11 über eine dünne Si-Säule 16 mit der Substratrückseite elektrisch verbunden bleibt. Die Si-Membran 11 mit dem implantiertem Emitter und die Si-Säule 16 bilden die vertikale pnp-Transistorstruktur. Auf der Substratrückseite bildet unterhalb der Si-Säule 16 eine p⁺ - Implantation 14 den Kollektoranschluß C des pnp-Transistors, der von einer rückseitigen n⁺ - Implantation 17 begrenzt ist.

Bei Stromdurchfluß durch diese vertikale pnp-Strukur wirkt die Si-Membran 11 als eine 'hotplate' und damit auf eine angrenzende Zündladung zündauslösend.

In der in Fig. 4b gezeigten Draufsicht ist die an den vier Si-Stegen 13 aufgehängte Si-Membran 11 mit der den Emitter bildenden p⁺- Implantation 14 zu sehen. Die Si-Stege 13 verbinden die zentral angeordnete Si-Membran 11 jeweils in diagonaler Ausrichtung mit einer Ecke des Anzündelements 7. Der Emitter weist in der rechten, oberen Ecke und in der linken, unteren Ecke des Anzündelements 7 Emitteranschlüsse E auf, die mittels p⁺-Implantationen 14 in den entsprechenden Si-Stegen 13 mit dem zentralen Emitter elektrisch verbunden sind. In der rechten unteren Ecke ist der Basisanschluß B des pnp-Transistors ausgebildet. Dazu ist vom n-dotierten Bereich der Si-Membran 11 ausgehend eine n⁺-Implantation 17 in den entsprechenden Si-Steg 13 bis zum Basisanschluß B implantiert.

Für Prüfzwecke kann über die Si-Stege 13 von links oben nach rechts unten ein Prufstrom über die Basis des pnp-Transistors geschickt werden. Durch Kontaktierung des linken oberen Si-Steges 13 mit einer p⁺-Implantation 14 von einem äußeren Prüfanschluß P bis in den zentralen, n-dotierten Bereich der Si-Membran 11 und Verwendung des Basisanschlusses B ensteht eine laterale pn-Diode, die als Sensorelement 6 zur Prüfling des Anzündelementes 7 mittels einer dynamischen Tempearturmessung in bekannter Weise benutzbar ist.

## Patentansprüche

1. Anzündelement für einen Zündkreis, mit mindestens einem Zündschalter (2, 3, 5), der als Transistor ausgebildet ist und zugleich Schalter und Anzündelement (7) ist, **dadurch gekennzeichnet**,
daß das Anzündelement ein Sensorelement (6) zur Überwachung des Zündkreises durch dynamische Temperaturmessung bei anliegendem Prüfsignal aufweist und in Silizium-Technologie gefertigt ist.

2. Anzündelement nach Anspruch 1, **dadurch gekennzeichnet**, daß nur ein Zündschalter (5) als Anzündelement (7) dient, wobei zusätzlich ein in Reihe geschalteter Zündschalter (8) vorgesehen ist, der nicht in das Anzündelement (7) integriert ist.

3. Anzündelement nach einem der Ansprüche 1 bis 2, **dadurch gekennzeichnet**, daß das Sensorelement (6) an dem/den Zündschaltern (2, 3, 5) elektrisch separiert ist.

4. Anzündelement nach einem der Ansprüche 1 bis 3, **dadurch gekennzeichnet**, daß das Sensorelement (6) eine Diode ist.

5. Anzündelement nach einem der Ansprüche 1 bis 4, **dadurch gekennzeichnet**, daß die Basis des/der Zündschalter (2, 3, 5) in einem Si-Chip (10) als dünne, in einem massiven Si-Rahmen (12) aufgehängte Si-Membran (11) ausgebildet ist, die in dem Si-Chip (10) gegenüber ihrer Umgebung thermisch isoliert und an der Oberfläche des Si-Chips (10) angeordnet ist und bei Stromdurchgang Zündenergie an eine angrenzende Zündladung abgibt.

6. Anzündelement nach Anspruch 5, **dadurch gekennzeichnet**, daß die thermische Isolierung der Si-Membran (11) mittels porösen Si-Bereichen (15) ausgeführt ist.

7. Anzündelement nach Anspruch 6, **dadurch gekennzeichnet**, daß die porösen Si-Bereiche (15) mittels der porösen Opferschichttechnik hergestellt sind.

8. Anzündelement nach einem der Ansprüche 1 bis 7, **dadurch gekennzeichnet**, daß die Basis des/der Zündschalter (2, 3, 5) eine vom Emitter getrennte Implantierung aufweist, deren Dotierung mit der Emitterdotierung übereinstimmt, und der so geschaffene pn-Übergang als Sensorelement (6) dient.

9. Anzündelement nach einem der Ansprüche 5 bis 8, **dadurch gekennzeichnet**, daß der/die Zündschalter (2, 3, 5) in dem Si-Chip (10) als vertikal angeordnete Transistorstrukturen ausgebildet sind.
